# EUROPEAN PATENT SPECIFICATION

(11) **EP 1 827 018 B1**
(45) Date of publication and mention of the grant of the patent: **22.11.2017**
(21) Application number: 05799287.7
(22) Date of filing: 25.10.2005
(51) Int. Cl.: H04N 5/93, G11B 27/00, G11B 27/034, G11B 27/10

(54) **VIDEO CONTENT REPRODUCTION SUPPORTING METHOD, VIDEO CONTENT REPRODUCTION SUPPORTING SYSTEM, AND INFORMATION DELIVERY PROGRAM**
VIDEOINHALT-WIEDERGABE-UNTERSTÜTZUNGSVERFAHREN, VIDEOINHALT-WIEDERGABE-UNTERSTÜTZUNGSSYSTEM UND INFORMATIONSABLIEFERUNGSPROGRAMM
PROCEDE ET SYSTEME DE SOUTIEN DE REPRODUCTION DE CONTENU VIDEO ET PROGRAMME DE LIVRAISON D'INFORMATIONS

(30) Priority: 03.12.2004 JP 2004351498
(43) Date of publication of application: 29.08.2007
(73) Proprietor: NEC Corporation, Minato-ku Tokyo 108-8001 (JP)
(72) Inventor: TAKAHASHI, Yusuke, Minato-ku, Tokyo 1088001 (JP)
(74) Representative: Betten & Resch
(86) International application number: PCT/JP2005/019592
(87) International publication number: WO 2006/059436

(56) References cited:
- EP-A- 0 939 405
- EP-A- 1 154 433
- WO-A-2004/100540
- JP-A- 2000 287 166
- JP-A- 2001 008 163
- JP-A- 2002 232 833

## Description

### Technical Field

The present invention relates to a video content playback assistance method, a video content playback assistance system, and a video content playback assistance device for assisting the playback of video based on video content, and more particularly relates to a video content playback assistance method, a video content playback assistance system, and a video content playback assistance device that enable video cueing at the time of playback.

The present invention further relates to a video playback device that plays video based on video content, an information distribution server for distributing information to a video playback device, and an information distribution program for distributing information to a video playback device.

### Background Art

When viewing video content that is stored on, for example, a hard disk recorder, fast-forward playback is, in some cases, carried out to skip video scenes.

When viewing a relayed program of, for example, a soccer or baseball game, the user may at times wish to skip video scenes in which there is no game action (for example, scenes in which points are not being scored). In such cases, the user must carry out manual fast-forward playback operations to skip the video scenes.

In such cases, the user must manipulate the hard disk recorder to carry out operations such as double-speed playback or fixed-interval skipped playback.

Alternatively, an approach can be considered in which the user can cue a video scene to skip video scenes. For example, a case is considered in which the video content is DVD content recorded on a DVD.

In such a case, the user can skip video scenes by using chapter information that is recorded on the DVD to cue the video in chapter units. In addition, JP-A-2001-84739 describes a video playback device that records scenes that have been once played and thus allows cueing of played scenes when viewed again.

WO 2004/100540 A discloses a method for summarizing video content wherein identical segments in different video contents are detected.

### Disclosure of the Invention

### The Problem to be Solved by the Invention

However, when manually performing cued playback, the determination of a suitable cue point is problematic, and the potential arises for skipping important scenes when cueing. For example, in the case of content having, for example, commercial messages (CM) of fixed time intervals, the user is able to determine cue points with some degree of ease.

In the case of a relay broadcast program of a sports match, however, the user is not able to predict the timing of important scenes such as scores.

As a result, in case of content such as sports relay broadcast programs in which important scenes cannot be predicted, the user is unable to determine the length of a video up to a cue point and is unable to properly cue a video scene.

Further, when the video content is a broadcast video, cue points such as chapter information are not recorded and video cueing through the use of chapter information is therefore not possible. In the case of a live broadcast program of a sports event, in particular, the broadcast station must broadcast the video in real time and broadcasting the program while conferring chapter information is therefore problematic.

The video playback device disclosed in JP-A-2001-84739 allows a user to cue to the points of scenes that have been once played.

However, because cued playback is not possible until the user has viewed the content at least one time, cued playback is not possible when viewing the video content for the first time. In particular, in the case of content such as the relay broadcast program of a sports event, a user is typically unlikely to repeatedly view a game video that he has already viewed, and the video playback device of JP-A-84739 is therefore not suited for the cued playback of programs such as relayed broadcasts of sports events.

When viewing news video of sports events such as soccer or baseball, only digest video of parts of games are shown and the user is therefore unable to view video of preceding or succeeding scenes that are of interest to the viewer.

For example, news video of a sports event are created by cutting out scenes specified by the program producer as digest video, and the user is therefore unable to predict the existence of video scenes by merely looking at the news video and is unable to view video that precede or succeed a scene of interest.

The present invention was realized to solve the above-described problems and is directed to providing a video content playback assistance method, a video content playback assistance system, a video content playback assistance device, a video playback device, an information distribution server, and an information distribution program that facilitate the cued playback of important scenes even for video content that is not conferred with cue point information.

### Means for Solving the Problem

The video content playback assistance method according to the present invention is a video content playback assistance method for assisting the playback of video based on video content and includes steps of:
acquiring identical video correspondence information (for example, video link information) that indicates the correspondence relation of identical video that are identical partial video contained in common in a plurality of items of video content;
when cued playback is instructed, specifying points of identical video in video content based on the acquired identical video correspondence information and specifying cue points based on the specified points of identical video; and
based on video content, reproducing video from the specified cue points.

In addition, the "acquisition of identical video correspondence information" is realized by, for example, receiving identical video correspondence information from an information distribution server by way of a communication network and generating identical video correspondence information based on video content.

The above-described configuration allows cue points to be specified based on points of identical partial video in video content that are indicated by identical video correspondence information and enables cued playback to be performed from the specified cue points.

Accordingly, the above-described configuration allows easy cued playback of important scenes even for video content that has not been conferred with cue point information.

For example, in the case of the broadcast of a soccer or baseball game, the relay video of the game are broadcast by live broadcast, and digest scenes of the game (score scenes or scenes of good plays) in sports news are compiled and broadcast in, for example, sports news.

The present invention detects and creates a correspondence relationship between the original video of, for example, the relayed video of a soccer or baseball game and the identical scenes of the digest video of, for example, the soccer or baseball news. When reproducing the original video, the intervals of the video that match with the digest video are used to realize cued playback.

The video content playback assistance method assists playback of video based on video content and preferably includes steps of:
accumulating a plurality of items of video content in advance;
detecting identical video, which are identical partial video contained in common in two or more items of video content within the accumulated video content;
based on the results of detecting identical video, generating identical video correspondence information that indicates the correspondence relation of identical video contained in each item of video content;
when cued playback is instructed, specifying the points of identical video in the video content based on the generated identical video correspondence information and specifying cue points based on the specified points of identical video; and
based on the video content, reproducing video from the specified cue points.

The video content playback assistance method may:
accumulate as video content: original video (for example, the relay program of a sports event) and digest video (for example, a news program) that contain partial video that are a part of the original video; and
detect identical partial video that are contained in common in the original video and the digest video that have been accumulated, and, by placing in correspondence the partial video of the digest video and the partial video of the original video that have been detected, generate identical video correspondence information.

By means of this configuration, using digest video that are produced by compiling partial video that are a portion of the original video enables the specification of cue points and enables cued playback even when cue point information has not been conferred to video content.

The video content playback assistance method may be a method for, when cued playback has been instructed, based on the identical video correspondence information, specifying, as cue points, points that are at a prescribed time interval before the leading points of identical video within video content.

This type of configuration enables cued playback from video immediately preceding an important scene (for example, score scenes in baseball or soccer) and allows a user to view the series of video leading up to an important scene.

In addition, the video content playback assistance method may detect video scene change points in the video content (for example, scenes in which a baseball inning changes or in which the batter changes) by means of video recognition of video contained in the video content or sound recognition of the sounds contained in the video content, and based on the detection results and identical video correspondence information, may specify as cue points video scene change points that immediately precede the leading points of identical video within video content.

According to this configuration, a user can view the series of video leading up to an important scene from a video scene change point that immediately precedes the important scene.

In addition, the video content playback assistance method may be a method for, when a plurality of cue points are specified according to instruction for cued playback during playback of video content, selecting from among the plurality of specified cue points the cue point that is closest to the currently played point and reproducing video content from the selected cue point.

The video content playback assistance method may further be a method for, when a plurality of cue points are specified according to instruction for cued playback during playback of video content, selecting any one cue point among the plurality of specified cue points according to a prescribed degree of importance (for example, the number of news programs that have picked up the identical video scenes) and reproducing the video content from the selected cue point.

A configuration of this type enables the selection and cued playback of video scenes as important scenes that have been picked up in a plurality of digest video (for example, news programs) or video scenes that match a user's interests (a favorite program or broadcast station).

The video content playback assistance method may further be a method including steps of:
when the playback of digest video that contain partial video that are a portion of original video has been instructed, determining whether there are original video that contain identical video common to the digest video based on identical video correspondence information;
upon determining the existence of original video that contain identical video, both reproducing the digest video and displaying an indication that original video corresponding to the digest video can be played; and
when the playback of the original video is instructed, reproducing the original video that correspond to the digest video that are being played.

According to a configuration of this type, a user can view original video of points preceding and succeeding a scene that is of interest to the user even when viewing digest video.

The video content playback assistance method may further be a method for, when the playback of original video is instructed, reproducing partial video of points immediately before or immediately after the points of identical video in original video based on identical video correspondence information.

The video content playback assistance method may further be a method that includes a step of, when the playback of video content is instructed, determining whether the video content for which playback has been instructed is original video or digest video; wherein, when the video content for which playback has been instructed is determined to be digest video, the digest video are played together with an indication that the original video that correspond to the digest video can be played; and when the video content for which playback has been instructed is determined to be original video, the original video are played and cued playback of the original video is carried out in accordance with instructions for cued playback.

A configuration of this type enables automatic determination of the video type and, based on the determination results, easy switching of the playback method.

The video content playback assistance method may further be a method for, when playback of video content is instructed, finding the degree of similarity between each frame picture contained in the video content and then, based on the degree of similarity that has been found, determining whether the video content comprises original video or digest video.

The video content playback assistance method may further assist playback of video based on video content and include steps in which:
a server (for example, video link information distribution server 10) accumulates a plurality of items of video content in advance;
the server detects identical video, which are identical partial video contained in common in two or more items of video content within the accumulated video content;
based on the results of detecting identical video, the server generates identical video correspondence information that indicates the correspondence relation of identical video contained in each item of video content;
the server distributes the generated identical video correspondence information by way of a communication network to a video playback device that plays video based on video content;
the video playback device, when cued playback is instructed, specifies the points of identical video within video content based on identical video correspondence information received from the server and specifies cue points based on the points of the specified identical video; and
the video playback device plays video from the specified cue points based on the video content.

A configuration of this type enables the easy cued playback of important scenes even in the case of video content on cue point information has not been conferred.

In addition, the video playback device need not generate video link information and the configuration of the video playback device can therefore be simplified.

The video content playback assistance method may further include steps in which:
when playback of video content is instructed, the video playback device determines whether the video content for which playback is instructed is original video or digest video;
upon determining that the video content for which playback is instructed is original video, the video playback device both plays the original video and carries out cued playback of the original video according to instructions for cued playback;
upon determining that the video content for which playback has been instructed is digest video, the video playback device both plays the digest video and displays an indication that the original video corresponding to the digest video can be played; and
upon being instructed to play original video during playback of digest video, the video playback device plays original video that correspond to the digest video that are being played.

A configuration of this type enables a user to view original video of points before and after a scene of interest to the user even when the user is viewing digest video.

In addition, the video playback device need not generate video link information, and the configuration of the video playback device can therefore be simplified.

The video content playback assistance system of the present invention assists playback of video based on video content and is provided with:
an information distribution server (realized by, for example, video link information distribution server 10) for distributing information; and
a video playback device for reproducing video based on video content;
wherein the information distribution server includes:
   content accumulation means 15) for accumulating a plurality of items of video content in advance;
   an identical video detection means (realized by, for example, identical video detection means 11) for detecting identical video, which are identical partial video contained in common in two or more items of content within the video content accumulated by the video accumulation means;
   a video correspondence information generation means (realized by, for example, video link information recording means 12) for, based on the detection results of the identical video detection means, generating identical video correspondence information that indicates the correspondence relation of identical video contained in each item of video content; and
   a video correspondence information distribution means (realized by, for example, link information transmission means 19) for transmitting identical video correspondence information, that has been generated by the video correspondence information generation means by way of a communication network, to the video playback device; and
the video playback device includes:
   a cue point specification means (realized by, for example, video playback means 24) for, when cued playback is instructed, specifying points of identical video within video content based on identical video correspondence information that has been received from the information distribution server and specifying cue points based on the specified points of identical video; and
   video playback means for, based on video content, reproducing video from cue points that have been specified by the cue point specification means.

In addition, in the video content playback assistance system, the video playback device may include a video type determination means (realized by, for example, original/digest video determination means 26) for, upon being instructed to play video contents, determining whether the video content for which playback has been instructed is original video or digest video; and
the video playback means may both play the original video and carry out cued playback of original video in accordance with instructions for cued playback when the video type determination means determines that the video content for which playback has been instructed is original video; may both play the digest video and display an indication that the original video that correspond to the digest video can be played when the video type determination determines that the video content for which playback has been instructed is digest video; and may play the original video that correspond to the digest video being played when the playback of original video is instructed during the playback of digest video.

A configuration of this type enables the automatic determination of the video type and easy switching of the method of video playback based on the determination results.

This configuration further allows a user to view original video of points before and after a scene of interest to the user even when the user is viewing digest video.

The video content playback assistance device according to the present invention assists the playback of video based on video content and is provided with:
a video correspondence information acquisition means (realized by, for example, video link information recording means 2) for acquiring identical video correspondence information that indicates the correspondence relation of identical video, which are identical partial video contained in common in a plurality of items of video content;
a cue point specification means (realized by, for example, video playback means 4) for, when cued playback is instructed, specifying points of identical video within video content based on identical video correspondence information that has been acquired by the video correspondence information acquisition means and specifying cue points based on the specified points of identical video; and
a video playback means for, based on video content, reproducing video from cue points that have been specified by the cue point specification means.

The video playback device according to the present invention plays video based on video content and is provided with:
cue point specification means (realized by, for example, video playback means 4) for, when cued playback is instructed, specifying points of identical video within video content based on identical video correspondence information that indicates the correspondence relation of identical video contained in each item of video content and specifying cue points based on the specified points of the identical video; and
video playback means for, based on video content, reproducing video from cue points that have been specified by the cue point specification means.

The video playback device plays video based on video content and is provided with:
a video storage means (realized by, for example, video content storage means 5) for accumulating a plurality of items of video content in advance;
an identical video detection means (realized by, for example, identical video detection means 1) for detecting identical video, which are identical partial video contained in common in two or more items of video content among the video content accumulated by the video storage means;
a video correspondence information generation means (realized by, for example, video link information recording means 2) for, based on the detection results of the identical video detection means, generating identical video correspondence information that indicates the correspondence relation of identical video contained in each item of video content;
a cue point specification means (realized by, for example, video playback means 4) for specifying the points of identical video in video content based on the identical video correspondence information that is generated by the video correspondence information generation means and specifying cue points based on the specified points of identical video; and
a video playback means for, based on video content, reproducing video from the cue points specified by the cue point specification means.

The video playback device may be provided with:
a video type determination means (realized by, for example, original/digest video determination means 6) for, when playback of video content is instructed, determining whether the video content for which playback has been instructed is original video or digest video; and
the video playback means for both reproducing original video and performing cued playback of original video in accordance with instructions for cued playback when the video type determination means determines that the video content for which playback has been instructed is original video, both reproducing digest video and displaying an indication that original video that correspond to the digest video can be played when the video type determination means determines that the video content for which playback has been instructed is digest video, and reproducing original video that correspond to the digest video that are being played when playback of original video is instructed during the playback of digest video.

A configuration of this type enables automatic determination of video type and easy switching of the video playback method based on the determination results.

In addition, this configuration allows a user to view original video of points preceding and succeeding a scene of interest to the user even when the user is viewing digest video.

The video playback device may play video based on video content in a video content playback assistance system that assists the playback of video based on video content, and may be provided with:
a video correspondence information reception means (realized by, for example, link information reception means 28) for receiving from an information distribution server that distributes information by way of a communication network identical video correspondence information that indicates the correspondence relation of identical video, which are identical partial video contained in common in a plurality of items of video content;
a cue point specification means for, when cued playback is instructed, specifying points of identical video in video content based on the identical video correspondence information received from the information distribution server and specifying cue points based on the specified points of the identical video; and
a video playback means for, based on video content, reproducing video from cue points that have been specified by the cue point specification means has not been conferred.

A configuration of this type enables easy cued playback of important scenes even for video content for which cue point information.

In addition, because the video playback device need not generate video link information, configuration of the video playback device can be simplified.

The information distribution server according to the present invention distributes information to a video playback device that plays video based on video content in a video content playback assistance system that assists the playback of video based on video content and is provided with:
video accumulation means for accumulating a plurality of items of video content in advance;
identical video detection means for detecting identical video, which are identical partial video that are contained in common in two or more items of video content within the video content accumulated by the video accumulation means;
video correspondence information generation means for, based on the detection results of the identical video detection means, generating identical video correspondence information that indicates the correspondence relation of identical video that are contained in each item of video content; and
video correspondence information distribution means for transmitting identical video correspondence information generated by the video correspondence information generation means to a video playback device by way of a communication network.

The information distribution program according to the present invention is a program for distributing information to a video playback device that plays video based on video content in a video content playback assistance system that assists the playback of video based on video content, the information distribution program causing a computer provided with a video accumulation means for accumulating a plurality of items of video content in advance to execute processes of:
detecting identical video, which are identical partial video contained in common in two or more items of video content among video content that is accumulated by the video accumulation means;
based on the detection results of identical video, generating identical video correspondence information that indicates the correspondence relation of identical video that are contained in each item of video content; and
transmitting the generated identical video correspondence information by way of a communication network to a video playback device.

### Effects of the Invention

According to the present invention, when cued playback is instructed, cue points are specified based on the points of identical video among video content that are indicated by identical video correspondence information, and cued playback is carried out from the specified cue points.

Accordingly, the present invention enables a facilitation of cued playback of important scenes even for video content for which cue point information has not been conferred.

### Brief Description of the Drawings

FIG. 1 is a block diagram showing an example of the configuration of a video playback device in which the video content playback assistance method according to the present invention has been applied;
FIG. 2 is a flow chart showing an example of: the link relation detection process in which a video playback device detects and records the link relations between items of video content, and the cued playback process for carrying out cued playback of video content;
FIG. 3 is an explanatory view showing an example of the link relation of each item of video content stored by video content storage means 5;
FIG. 4 is an explanatory view showing an example of a video display screen of original video;
FIG. 5 is a block diagram showing another example of the configuration of a video playback device in which the video content playback assistance method is applied;
FIG. 6 is a flow chart showing an example of the link relation detection process in which a video playback device detects and records the link relations between items of video content and the playback process in which video type is determined and cued playback or playback of original video is carried out;
FIG. 7 is an explanatory view showing an example of the video display screen of digest video;
FIG. 8 is a block diagram showing an example of the configuration of a video content playback assistance system according to the present invention;
FIG. 9 is a function block diagram showing an example of the functional configuration of each device of the video content playback assistance system shown in FIG. 8;
FIG. 10 is a flow chart showing an example of the distribution process in which video link information distribution server 10 distributes video link information to video playback device 20; and
FIG. 11 is a function block diagram showing another example of the functional configuration of each device of the video content playback assistance system shown in FIG. 8.

### Explanation of Reference Numbers

- 1: identical video detection means
- 2: video link information recording means
- 3: video link information storage means
- 4: video playback means
- 5: video content storage means
- 6: original/digest video determination means

### Best Mode for Carrying Out the Invention

### First Embodiment

Explanation next regards the first embodiment of the present invention with reference to the accompanying figures.

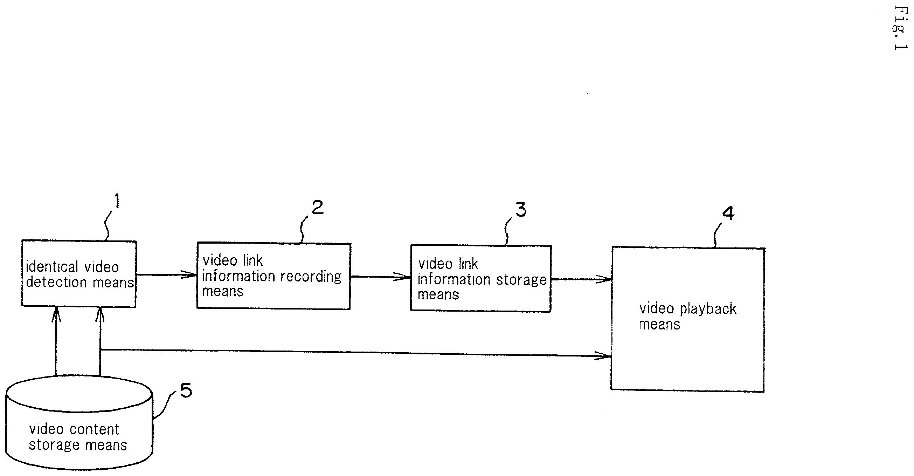

FIG. 1 is a block diagram showing an example of the configuration of a video playback device in which the video content playback assistance method according to the present invention has been applied.

More specifically, in the present embodiment, the video playback device is realized by a hard disk recorder (hereinbelow also referred to as an HDD recorder). The video playback device may also be, for example, a DVD recorder or a video recorder in which a hard disk has been mounted.

As shown in FIG. 1, the video playback device includes: identical video detection means 1, video link information recording means 2, video link information storage means 3, video playback means 4, and video content storage means 5.

More specifically, video content storage means 5 is a recording medium such as a hard disk, DVD-R, CD-ROM, or memory. In the present embodiment, explanation regards a case in which video content storage means 5 is a hard disk mounted in an HDD recorder.

Video content storage means 5 accumulates a plurality of items of video content such as television broadcast program video or DVD video in advance.

Video content storage means 5 further stores as video content: original video and digest video that contain video scenes (partial video) of portions of the original video.

For example, video content storage means 5 stores original video such as the relay broadcast of a sports event.

Video content storage means 5 further stores digest video such as a news program that contains video scenes of a portion of the sports event.

More specifically, identical video detection means 1 is realized by the control module of the HDD recorder. Identical video detection means 1 is equipped with the function of detecting identical video scenes contained in common in two or more items of video content among the video content accumulated by video content storage means 5.

In the present embodiment, video content storage means 5 stores original video and digest video, and identical video detection means 1 therefore detects identical video scenes that are contained in common in extracted original video and digest video.

For example, identical video detection means 1 detects video scenes that are contained in common in the relay broadcast and a news program of a sports event.

Typically, digest video of, for example, a news program usually contain important scenes such as video scenes of score scenes or good plays among the original video of the relay program of a game.

In the present embodiment, the digest video of, for example, a news program are used to extract the common scenes of original video and digest video, whereby important scenes among the original video of, for example, the relay program of a game are detected.

More specifically, video link information recording means 2 is realized by the control module of the HDD recorder.

Video link information recording means 2 is equipped with functions for, based on the detection results of identical video detection means 1, recording the positions and link relations of identical scenes between each item of video content.

In the present embodiment, video link information recording means 2, based on the detection results of identical video detection means 1, generates video link information that indicates the correspondence relation (link relations) of identical video scenes contained in each item of video content. Video link information recording means 2 then stores the generated video link information in video link information storage means 3.

More specifically, video link information storage means 3 is realized by the storage device of an HDD recorder (for example, memory or a hard disk). Video link information storage means 3 stores video link information that is generated by video link information recording means 2.

More specifically, video playback means 4 is realized by the control module and input/output interface of an HDD recorder. Video playback means 4 is equipped with functions for extracting video content from video content storage means 5 in accordance with a user's instruction for playback, and for reproducing video based on the extracted video content.

For example, a video playback device is connected to a display device such as a display and a speech output device such as a speaker. Based on video content, video playback means 4 displays video on the display and delivers speech from the speech output device.

Alternatively, based on the video content, video playback means 4 may perform bitstream distribution by way of a network such as the Internet.

Video playback means 4 is further equipped with functions for, when reproducing original video, extracting video link information that corresponds to the original video from video link information storage means 3, and based on the extracted video link information, displaying prescribed link information together with video.

In the present embodiment, video playback means 4 specifies identical scenes among the original video that are contained in common with the corresponding digest video based on video link information. Video playback means 4 then specifies the cue points based on the points of each specified identical scene and both displays link information that contains each specified cue point together with the video.

Video playback means 4 is further equipped with functions for specifying cue points based on video link information when cued playback is instructed by a user during the playback of original video, and for carrying out cued playback of video from the specified cue points.

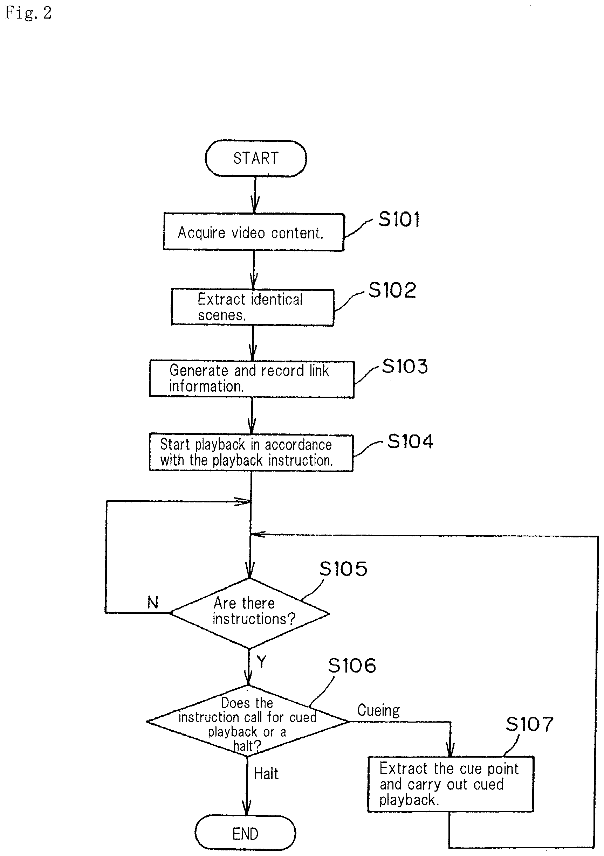

Explanation next regards operation. FIG. 2 is a flow chart showing an example of the link relation detection process in which a video playback device detects and records the link relations between items of video content and the cued playback process in which the video playback device carries out cued playback of video content.

Explanation first regards the operation of the link relation detection process for detecting and recording link relations between items of video content.

Identical video detection means 1 extracts and acquires each item of video content from video content storage means 5 (Step S101).

In the present embodiment, identical video detection means 1 extracts original video and digest video that are stored by video content storage means 5 at a predetermined timing.

For example, when programmed recording is carried out and video content is newly stored in video content storage means 5, identical video detection means 1 extracts each item of video content from video content storage means 5.

Alternatively, identical video detection means 1 may extract each item of video content from video content storage means 5 in accordance with instruction from the user. Identical video detection means 1 may also extract each item of video content from video content storage means 5 after the passage of predetermined time intervals.

Identical video detection means 1 collates each item of extracted video content to search for and detect common scenes (Step S102). In this case, identical video detection means 1 detects as identical scenes video scenes in which identical video continue in a time series other than on-screen subtitles and noise portions.

For example, identical video detection means 1 finds a feature quantity of each frame video that is contained in a video for each extracted item of video content.

Identical video detection means 1 uses the feature quantity that has been found to find the degree of similarity between partial video that are contained in each item of video content.

Identical video detection means 1 determines whether the degree of similarity that has been found equals or exceeds a predetermined threshold value. Identical video detection means 1 then determines that the scenes of partial video, for which the degree of similarity between items of video content is at least a threshold value, are identical scenes.

The method of determining identical scenes between items of video content is described in, for example, JP-A-2002-58049.

Upon detecting common scenes, video link information recording means 2 generates and records video link information for the detected identical scenes (Step S103).

For example, it is assumed that in Step S102, identical video detection means 1 detects that the scene from "10:40:45" to "10:40:55" contained in video A and the scene from "10:12:12" to "40:12:22" contained in video B are identical scenes.

In this case, video link information recording means 2 generates video link information "video A: 10:40:45-10:40:55 = video B: 40:12:12-40:12:22." Video link information recording means 2 then stores the generated video link information in a database (video link information storage means 3).

For example, partial video of sports events such as scoring scenes are often included in the digest video of a news program.

In this case, identical video detection means 1 collates the news video with the original video of the sports event and detects, for example, a scoring scene as a common identical scene.

Based on the detection results, video link information recording means 2 then generates and records video link information of the digest video and the original video that contain the score scene as an identical scene.

For example, video link information recording means 2 generates video link information by placing in correspondence relation the video scenes of the digest video and the video scenes of the original video that have been detected as identical scenes.

The video playback device executes the processes from Step S101 to Step S103 for all video content that has been stored by video content storage means 5. The video playback device then generates and records video link information of identical scenes for all video content that has been accumulated by video content storage means 5.

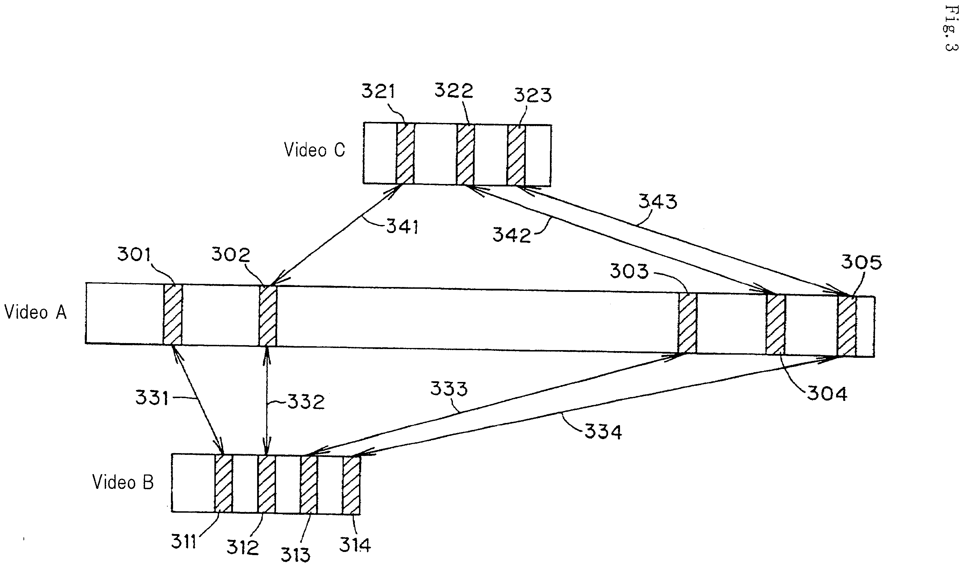

FIG. 3 is an explanatory view showing an example of the link relations of each item of video content that is stored by video content storage means 5.

In FIG. 3, video A is, for example, original video of a relay program of a sports event. Video B and video C are each digest video of a news program that contain partial video of the event of video A.

The video playback device detects common scenes that are contained in video A and video B (partial video 301, 302, 303, 305 and partial video 311, 312, 313 and 314 shown in FIG. 3) and generates and records video link information indicating the link relations 331, 332, 333 and 334 of each common scene.

The video playback device further detects common scenes contained in video A and video C (partial video 302, 304 and 305 and partial video 321, 322, 323 shown in FIG. 3) and generates and records video link information indicating the link relations 341, 342 and 343 of each common scene.

Video link information recording means 2 may be set not to generate video link information when the detected identical scene between items of video content is a commercial message (hereinbelow abbreviated as "CM") scene. For example, the video playback device is equipped with a database for recording CM video in advance and determines whether detected identical scenes are CM scenes by means of collation with CM video recorded in the database.

The method for determining CM scenes by collation with CM video that have been recorded in advance is described in, for example, JP-A-2002-58049.

CM video are typically created such that the length of the video is a multiple of 15 seconds. Video link information recording means 2 may therefore determine whether the video length of a detected identical scene is a multiple of 15 seconds, and upon determining that the video length is a multiple of 15 seconds, may determine that the identical scene is a CM video.

Explanation next regards the operation of the cued playback process for effecting cued playback of video content.

The user, when wishing to view video content, manipulates the video playback device to input and instruct the playback of video content. Video playback means 4 begins playback of video content in accordance with the user's playback instructions (Step S104).

In this case, video playback means 4 extracts the video content instructed for playback by the user from video content storage means 5. Video playback means 4 then plays video based on the extracted video content.

Explanation next regards a case in which video playback means 4 plays original video in the present embodiment.

When the video content for which playback is instructed is original video, video playback means 4 extracts from video link information storage means 3 video link information that corresponds to the video content that is to-be played.

Video playback means 4 then effects the display on a display device of video based on the video content together with the display of link information that includes display of cue points based on the extracted video link information.

In this case, when there is a plurality of items of video link information corresponding to the video content that is being played, video playback means 4 extracts all items of video link information and displays link information that contains all cue points based on the extracted video link information.

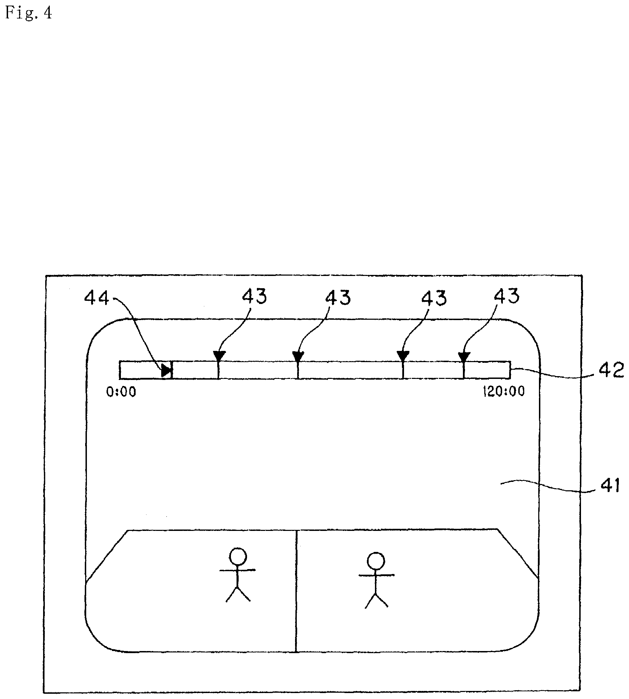

FIG. 4 is an explanatory view showing an example of the video display screen of original video. As shown in FIG. 4, video playback means 4 displays video 41 based on the video content.

For example, video playback means 4 displays relay video of a sports event such as a soccer or baseball game based on video content. In addition, as shown in FIG. 4, video playback means 4 displays link information 42 together with video 41. Link information 42 contains cue points 43 as shown in FIG. 4.

Video playback means 4 may acquire information such as news commentary from the news program, may acquire various commentary information such as news commentary by way of the Internet, and may display this information together with video 41 and link information 42.

Video playback means 4 may further acquire rating information of players by way of the Internet and may display this information together with video 41 and link information 42. Still further, video playback means 4 may recognize a player's face or a player's uniform number by means of video recognition of the video and may display specify players that are active in the sports event and display scenes featuring the players.

The user manipulates the video playback device to input instructions when the user wishes to halt playback or effect cued playback of the video that are being played during playback of video content (original video).

Video playback means 4 determines whether instructions have been entered by the user during playback of video content (Step S105). Upon determining that instructions have not been entered, video playback means 4 continues playback of video content.

Upon determining that instructions have been entered, video playback means 4 determines whether the instruction content is instruction input for "cued playback" or instruction input for "playback halt" (Step S106).

Upon determining that the instruction content of the input instruction is for "playback halt," video playback means 4 halts the playback of video content and terminates the process.

Upon determining that the instruction content of the input instructions is for "cued playback," video playback means 4 specifies the cue points of the video and effects cued playback from the specified cue points (Step S107).

For example, the user selects "cued playback" button 44 contained in link information 42 of the video display screen shown in FIG. 4 to enter instructions, whereupon video playback means 4 determines that the "cued playback" instruction has been entered and carries out cued playback.

In this case, video playback means 4 specifies the points of identical scenes in the video content based on the video link information that corresponds to the video content that is being played and specifies the cue points based on the specified points of the identical scenes.

Video playback means 4 then carries out cued playback from the specified cue points based on the video content.

When a plurality of cue points are specified in accordance with the entered instruction "cued playback," video playback means 4 selects the cue point closest to the point of the current playback time from among the plurality of specified cue points and effects cued playback from the selected cue point.

Rather than specifying the leading point of an identical scene within the video content indicated by the video link information as the cue point, video playback means 4 may specify a point, that is a prescribed time interval before the leading point of an identical scene, as the cue point.

Based on the specified cue point, video playback means 4 may then carry out cued playback from the point that is a prescribed time interval before the leading point of an identical scene. For example, video playback means 4 may carry out cued playback from a point that is a fixed number of seconds, such as five seconds, before the leading point of an identical scene.

Video playback means 4 may also detect change points of video scenes by implementing video recognition of video included in the video content or sound recognition of sounds contained in the video content.

Video playback means 4 may then, based on the results of detecting change points and video link information, specify the change points of video scenes that immediately precede the leading points of identical scenes as the cue points and then effect cued playback.

When the video being played is a relay program of a baseball game, video playback means 4 may detect the change point of an inning or the change point of a batter immediately before the leading point of an identical scene and then effect cued playback from the change point of the inning or change point of the batter immediately before the leading point of the identical scene.

In such cases, video playback means 4 may perform video recognition of the video of a scoreboard or a count display of strikes/balls/outs that is contained in a relay video to determine whether the video is the change of an inning or the change of a batter. Video playback means 4 then carries out cued playback from the point that has been determined as a change point of an inning or a change point of a batter.

When the video that are being played are a relay program of a soccer game, video playback means 4 may detect the start point of the play immediately before the leading point of an identical scene and may then effect cued playback from the start point of the play immediately before the leading point of the identical scene.

In such cases, video playback means 4 implements sound recognition of sound data contained in the video content to detect the point at which a referee's whistle sounds. Video playback means 4 then determines the point at which the referee's whistle is heard as the start point of the play and then effects cued playback from the point determined to be the start point of the play.

When specifying a plurality of cue points, rather than effecting cued playback from the cue point closest to the point of the currently played time, video playback means 4 may select the cue point of the scene that has been determined as important among the plurality of cue points and then effect cued playback.

In this case, a degree of importance is conferred on the scene of each cue point in accordance with conditions that have been prescribed in advance, and video playback means 4 then selects the cue point of an important scene in accordance with the degree of importance and effects cued playback from the selected cue point.

For example, when scenes of a sports broadcast have been taken up by a plurality of news programs, video playback means 4 may define the degree of importance according to the number of news programs that have taken up that scene.

In such a case, video playback means 4 finds the number of items of video link information that are linked to an identical scene contained in original video as the degree of importance of that scene. Video playback means 4 then selects the cue point of scenes in which the obtained degree of importance is at least a prescribed value and carries out cued playback.

For example, in the example shown in FIG. 3, a comparison of partial video 301 and partial video 302 contained in original video A shows that partial video 302 is included in common in both digest video B and C, but partial video 301 is contained in only digest video B.

Video playback means 4 thus finds the degree of importance of partial video 302 to be "2" and the degree of importance of partial video 301 to be "1" and determines partial video 302 to be an important scene in accordance with the obtained degree of importance. Video playback means 4 then implements cued playback from the cue point that corresponds to partial video 302 that has been determined to be an important scene.

Alternatively, the user may be allowed to customize the method of cued playback based on, for example, the interests of the user. For example, video playback means 4 may, in accordance with customization by the user, select cue points by taking scenes used in the user's preferred news program or broadcast station as important scenes and thus effect cued playback.

As described hereinabove, according to the present embodiment, a video playback device generates video link information indicating the link relations of identical scenes contained in common in each item of video content. Then, when cued playback is instructed, the video playback device specifies cue points in accordance with the points of identical scenes within the video content indicated by the video link information and implements cued playback from the specified cue points.

As a result, even when reproducing accumulated video content to which cue point information has not been conferred, cue point information can be conferred automatically, and cued playback can be realized from the point of a scene that has been taken up in digest video when viewing original video.

In addition, even when the user has not carried out compiling or playback operations before viewing, scenes that have been taken up in digest video can be used to play important scenes.

Accordingly, cued playback of important scenes can be easily realized even for video content on which cue point information has not been conferred.

### Second Embodiment

Explanation next regards the second embodiment of the present invention with reference to the accompanying drawings.

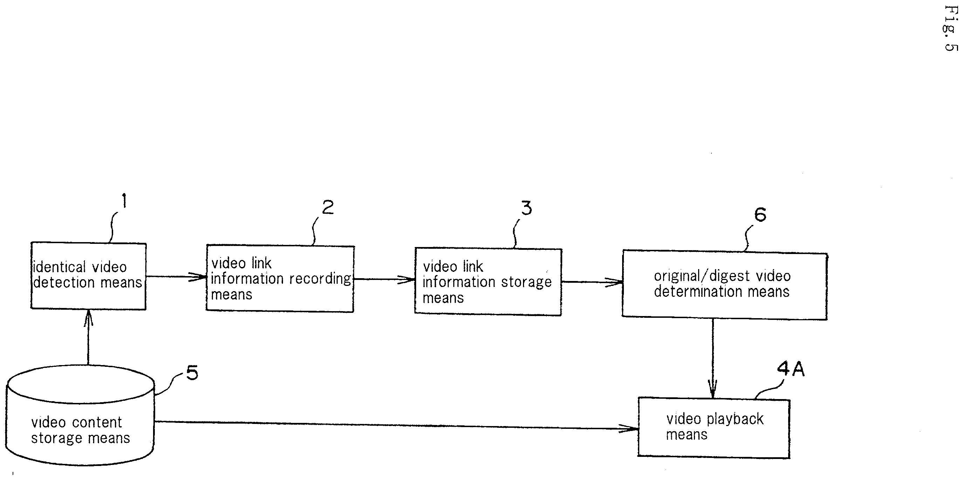

FIG. 5 is a block diagram showing another example of the configuration of a video playback device in which the video content playback assistance method has been applied.

More specifically, in the present embodiment, the video playback device is realized by an HDD recorder, as in the first embodiment. The video playback device may be, for example, a DVD recorder or video recorder in which a hard disk is mounted.

As shown in FIG. 5, the video playback device includes original/digest video determination means 6 in addition to the constituent elements shown in the first embodiment.

In addition, the video playback device in the present embodiment differs from the first embodiment in that the functions of video playback means 4A differ from the functions of video playback means 4 shown in FIG. 1.

The functions of identical video detection means 1, video link information recording means 2, video link information storage means 3, and video content storage means 5 are the same as described in the first embodiment.

More specifically, original/digest video determination means 6 is realized by the control module of an HDD recorder. Original/digest video determination means 6 is equipped with functions for, when playback is instructed by the user, determining whether the video content for which playback has been instructed is original video or digest video.

In the present embodiment, original/digest video determination means 6, upon being instructed by the user to play video content, extracts from video content storage means 5 video content for which playback is instructed and video content that contains identical scenes that are common to the video content for which playback has been instructed based on video link information that corresponds to the video content for which playback has been instructed.

Original/digest video determination means 6 then determines whether any of the extracted video content is original video or digest video.

More specifically, video playback means 4A is realized by the control module and the input/output interface of an HDD recorder.

As in the first embodiment, video playback means 4A is equipped with functions for reproducing video content in accordance with the playback instructions of the user.

Video playback means 4A is further equipped with functions for implementing cued playback in accordance with the playback instructions of the user when original video are being played, as in the first embodiment.

In addition to the functions shown in the first embodiment, video playback means 4A is further equipped with functions for extracting and reproducing a portion of original video in accordance with the user's instructions when reproducing digest video.

In the present embodiment, during the playback of digest video, video playback means 4A determines whether original video exist that contain identical scenes common to the digest video based on video link information that corresponds to digest video.

Upon determining the existence of original video that contain identical scenes, video playback means 4A displays on the display device together with the video that is being played an indication that the original video that correspond to the digest video can be played. Video playback means 4A then plays the partial video of the original video that corresponds to the digest video when the user instructs playback of the original video during the playback of digest video.

In the present embodiment, video playback means 4A plays partial video of points immediately before or immediately after an identical scene in the original video in accordance with the user's instructions.

Explanation next regards operation.

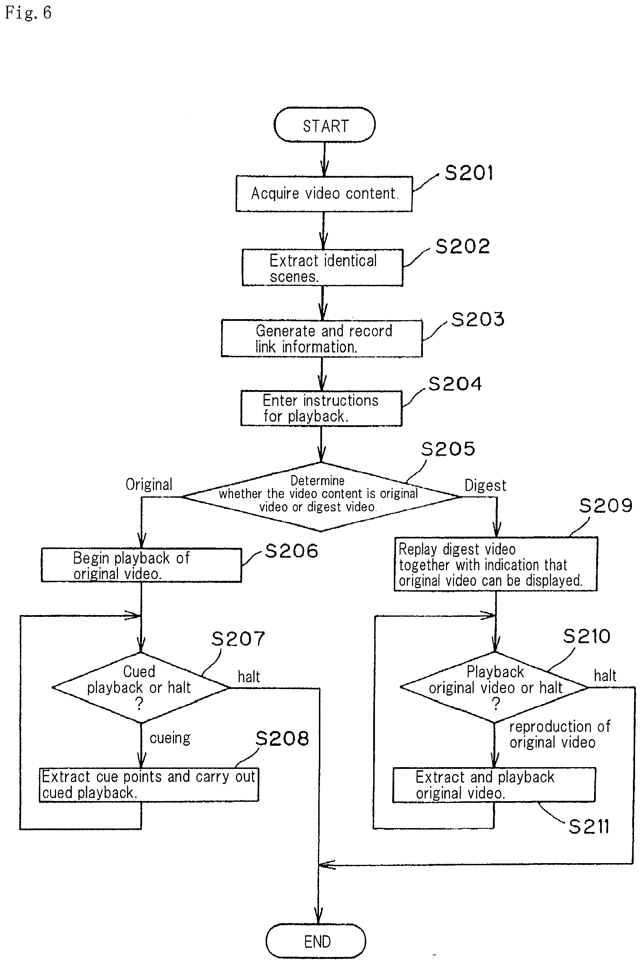

FIG. 6 is a flow chart showing an example of the link relation detection process in which the video playback device detects and records the link relations between items of video content, and an example of the playback process in which the video playback device determines the video type and carries out cued playback or original video playback.

Explanation first regards the operation in the link relation detection process in which the link relations between items of video content are detected and recorded.

In FIG. 6, the process from Step S201 to Step S203 is the same as the process from Step S101 to Step S103 in the first embodiment. In other words, according to the same procedure as the first embodiment, the video playback device detects video scenes contained in each item of video content and generates and records video link information.

Explanation next regards the operation of the playback process in which the video type is determined and cued playback or original video playback is carried out.

When wishing to view video content, the user operates the video playback device to input instructions for playback of video content. Original/digest video determination means 6 receives the instructions for playback according to the user's instructions (Step S204).

Original/digest video determination means 6 determines whether the video content for which the user has instructed playback is original video or digest video (Step S205).

In this case, original/digest video determination means 6 extracts from video link information storage means 3 video link information that corresponds to the video content for which playback has been instructed. Based on the extracted video link information, original/digest video determination means 6 further extracts from video content storage means 5 the video content for which playback has been instructed and video content that contains identical scenes in common with the video content for which playback has been instructed.

Original/digest video determination means 6 then determines whether any of the extracted video content is original video or digest video.

For example, a digest is video created by cutting out a portion of original video and can be determined by the following method.

In the digest video of, for example, a news program, the content of video scenes frequently undergoes great changes before and after a scene that features a portion of a game broadcast. In contrast, in the original video of the relay program of a game, video scenes of similar content are generally broadcast continuously.

Original/digest video determination means 6 extracts video scenes of points before and after identical scenes contained in each item of video content and calculates the degree of similarity between the frame video of identical scenes and frame video of preceding and succeeding points. Original/digest video determination means 6 then compares the obtained degrees of similarity and determines video content that has the greater degree of similarity (video content having few changes in video scenes) to be original video.

Original/digest video determination means 6 further determines video content that has a low degree of similarity (having large changes of video scenes) to be digest video.

Based on the determination results, original/digest video determination means 6 adds information regarding which video are original video and which are digest video to the video link information stored by video link information storage means 3.

In the case of comparing video A and video B shown in FIG. 3, for example, original/digest video determination means 6 determines video A to be original video and video B to be digest video, and updates the video link information to "video A: 10:40:45-10:40:55 (original) = video B: 40:12:12-40:12:22 (digest)."

In the case of comparing video A and video C shown in FIG. 3, original/digest video determination means 6 determines video A to be original video and video C to be digest video, and updates the video link information to "video A: 10:53:08-10:53:48 (original) = video C: 41:20:43-41:21:23 (digest)."

In addition, original/digest video determination means 6 may further determine whether video are original video or digest video based on the broadcast date and time, the broadcast time interval, and the program type of the video content (for example, broadcast program).

For example, when the broadcast date and time of one item of extracted video content is earlier than the other item of video content and the broadcast time interval is longer, original/digest video determination means 6 may determine that the item of video content having the earlier broadcast date and time and longer broadcast time interval is original video.

In addition, when the program type of one item of extracted video content is "sports" and the program type of the other item of video content is "news," original/digest video determination means 6 may determine that the video content for which the program type is "sports" is original video.

When video content for which playback has been instructed is determined to be original video, video playback means 4A starts playback of the original video based on the video content for which playback has been instructed (Step S206). The process of reproducing original video is the same as the process of Step S104 in the first embodiment.

Video playback means 4A determines whether instructions have been entered as input by the user during the playback of the original video, and determines whether the instruction content is instruction input for "cued playback" or instruction input for "playback halt" (Step S207).

Upon determining that instructions have been entered for "cued playback," video playback means 4A specifies the cue points of the video and carries out cued playback of the video from the specified cue points (Step S208).

The process of cued playback of original video is the same as the process from Step S105 to Step S107 in the first embodiment.

Upon determining that the video content for which playback has been instructed is digest video, video playback means 4A extracts the video content for which playback has been instructed from video content storage means 5 and begins playback of the digest video. Video playback means 4A further determines whether there are original video that contain identical scenes common to the digest video based on the video link information that corresponds the digest video.

If video playback means 4A determines that original video exist that contain identical scenes, video playback means 4A displays both the digest video that are being played and an indication that the original video can be played (Step S209).

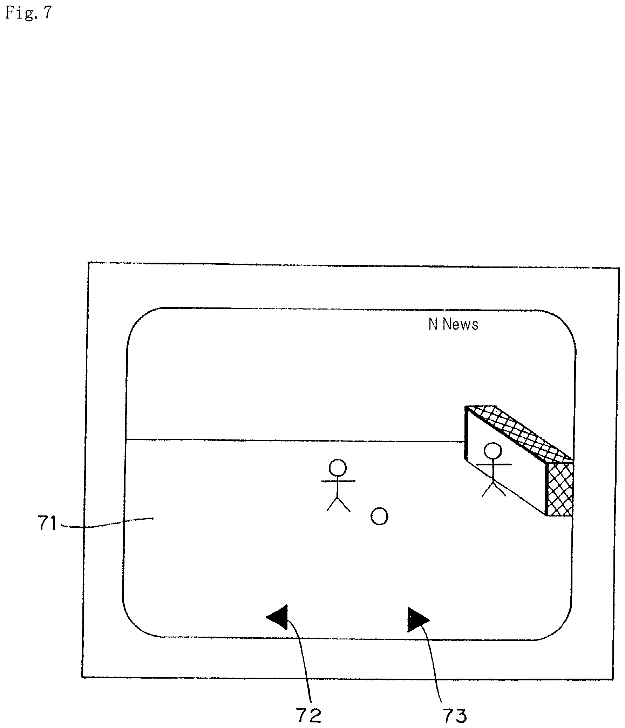

FIG. 7 is an explanatory view showing an example of the video display screen of digest video.

As shown in FIG. 7, video playback means 4A displays video 71 based on the video content. For example, based on the video content, video playback means 4A displays news video that contain a score scene in soccer or baseball.

Further, as shown in FIG. 7, video playback means 4A displays video 71 together with displays 72 and 73 indicating that original video can be played.

In FIG. 7, display (hereinbelow also referred to as the "previous scene playback" button) 72 is used for entering an instruction to play partial video of a point immediately before an identical scene in the original video.

In addition, display (hereinbelow also referred to as "succeeding scene playback" button) 73 is used for entering an instruction to play partial video of a point immediately after an identical scene in the original video.

When the user wishes to play original video or wishes to halt playback during the playback of video content (digest video), the user operates the video playback device to enter instructions. Upon input of an instruction by the user, video playback means 4A determines whether the instruction content is instruction input to "play original video" or instruction input to "halt playback" (Step S210).

If video playback means 4A determines that the instruction content is instruction input to "halt playback," video playback means 4A halts the playback of video content and terminates the process.

Upon determining that the instruction content is instruction input to "play original video," video playback means 4A extracts original video that correspond to the digest video being played (original video that contain identical scenes) from video content storage means 5. Video playback means 4A then plays the extracted original video (Step S211).

For example, the user selects "previous scene playback" button 72 on the video display screen shown in FIG. 7 to input an instruction, whereupon video playback means 4A plays partial video of the point immediately before the identical scene in the extracted original video.

As an alternative example, the user selects "succeeding scene playback" button 73 on the video display screen shown in FIG. 7 to input an instruction, whereupon video playback means 4A plays the partial video of a point immediately after the identical scene in the extracted original video.

As described in the foregoing explanation, according to the present embodiment, the video playback device determines whether the video content that is the object of playback is original video or digest video.

In addition, when reproducing digest video, the video playback device plays the corresponding original video according to the user's instructions. Accordingly, even when viewing digest video, a user is able to view the original video of points before and after a scene of interest to the user.

For example, when viewing a sports news program, a user may wish to see scenes immediately before or immediately after a score scene or a video scene of a good play that has been highlighted in the news. In this case, even when viewing the news program, the user can view the video scene immediately before the scene highlighted in the news, or can view the next video scene.

### Third Embodiment

Explanation next regards the third embodiment of the present invention with reference to the accompanying figures.

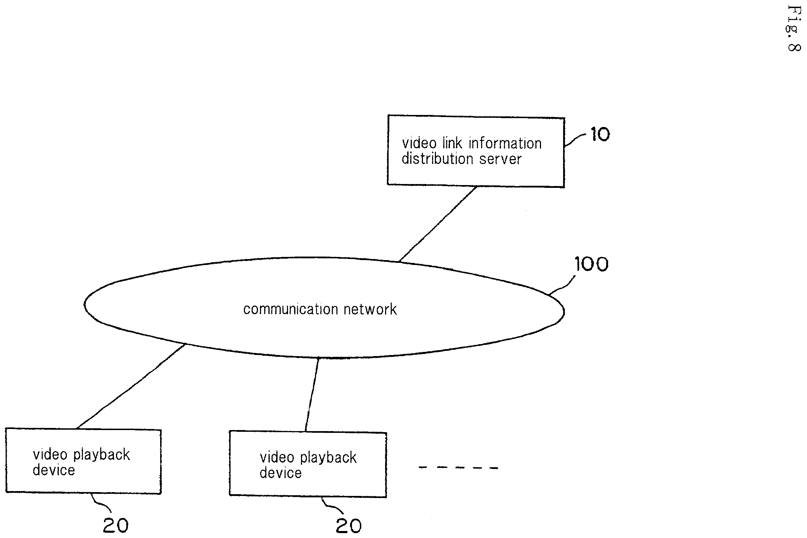

FIG. 8 is a block diagram showing an example of the configuration of the video content playback assistance system according to the present invention.

As shown in FIG. 8, the video content playback assistance system includes video link information distribution server 10 and a plurality of video playback devices 20.

Further, as shown in FIG. 8, video link information distribution server 10 and each of video playback devices 20 in the video content playback assistance system are connected by way of communication network 100 such as the Internet.

In the present embodiment, each of video playback devices 20 carries out cued playback of original video based on video link information, as in the first embodiment.

In the present embodiment, each of video playback devices 20 does not itself generate video link information, but rather, implements cued playback of original video by receiving a video link information distribution service from a service provider.

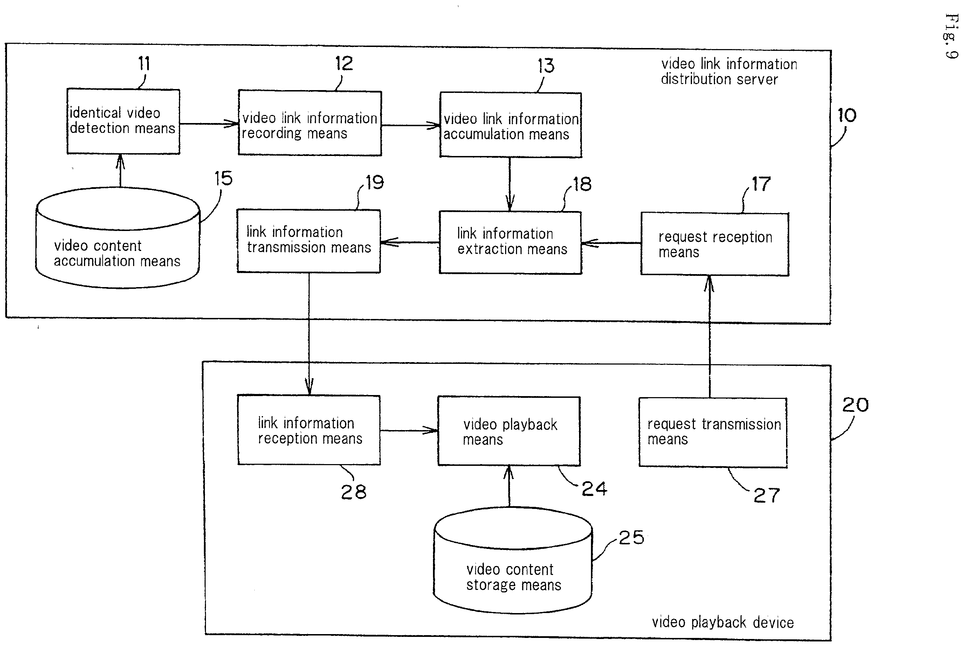

FIG. 9 is a function block diagram showing an example of the functional configuration of each device of the video content playback assistance system shown in FIG. 8.

Video link information distribution server 10 is a server managed by a service provider that distributes video link information. More specifically, video link information distribution server 10 is realized by an information processing device such as a personal computer.

As shown in FIG. 9, video link information distribution server 10 includes: identical video detection means 11, video link information recording means 12, video link information accumulation means 13, video content accumulation means 15, request reception means 17, link information extraction means 18, and link information transmission means 19.

More specifically, video content accumulation means 15 is realized by a database device of video link information distribution server 10. Video content accumulation means 15 accumulates in advance a plurality of items of video content such as television broadcast program video or DVD video.

Video content accumulation means 15 stores as video content: original video and digest video that contains video scenes of a portion of the original video.

More specifically, identical video detection means 11 is realized by a CPU of video link information distribution server 10 that operates in accordance with a program.

Identical video detection means 11 is equipped with functions for extracting each item of video content accumulated by video content accumulation means 15 and for detecting identical scenes contained in each item of video content.

The basic functions of identical video detection means 11 are the same as the functions of identical video detection means 1 in the first embodiment.

More specifically, video link information recording means 12 is realized by the CPU of video link information distribution server 10 that operates in accordance with a program. Video link information recording means 12 is equipped with functions for generating and recording video link information based on the detection results of identical video detection means 11.

The basic functions of video link information recording means 12 are the same as the functions of video link information recording means 2 in the first embodiment.

More specifically, video link information accumulation means 13 is realized by a database device of video link information distribution server 10. Video link information accumulation means 13 accumulates video link information that has been generated by video link information recording means 12.

More specifically, request reception means 17 is realized by the CPU and network interface of video link information distribution server 10 that operates in accordance with a program. Request reception means 17 is equipped with functions for receiving requests for the distribution of video link information from video playback devices 20 by way of communication network 100.

More specifically, link information extraction means 18 is realized by the CPU of video link information distribution server 10 that operates in accordance with a program.

Link information extraction means 18 is equipped with functions for extracting from video link information accumulation means 13 video link information for which distribution has been requested based on a request for distribution received by request reception means 17.

More specifically, link information transmission means 19 is realized by the CPU and the network interface of video link information distribution server 10 that operates in accordance with a program.

Link information transmission means 19 is equipped with functions for transmitting video link information, that has been extracted by link information extraction means 18, to video playback devices 20 by way of communication network 100.

More specifically, video playback devices 20 are realized by hard disk recorders. Video playback devices 20 may be DVD recorders or video recorders. As shown in FIG. 9, video playback device 20 includes video playback means 24, video content storage means 25, request transmission means 27, and link information reception means 28.

Video content storage means 25 is more specifically a storage medium such as a hard disk, DVD-R, CD-ROM, or memory. Video content storage means 25 stores video content such as television broadcast program video or DVD video.

As video content, video content storage means 25 stores original video and digest video that contain video scenes of a portion of the original video.

Video playback means 24 is more specifically realized by the control module and input/output interface of an HDD recorder. Video playback means 24 is equipped with functions for extracting video content from video content storage means 25 and for reproducing video based on extracted video content in accordance with the user's operations.

Video playback means 24 is further provided with functions for carrying out cued playback in accordance with the user's instructions when reproducing original video. The basic functions of video playback means 24 are the same as the functions of video playback means 4 in the first embodiment.

Request transmission means 27 is more specifically realized by the control module and network interface of an HDD recorder.

Request transmission means 27 is equipped with functions for transmitting requests for distribution of video link information by way of communication network 100 to video link information distribution server 10 at predetermined timings.

For example, when programmed recording is carried out to newly store video content in video content storage means 25, request transmission means 27 transmits a request for the distribution of video link information that corresponds to the recorded video content to video link information distribution server 10.

Alternatively, request transmission means 27 may transmit a request for the distribution of video link information to video link information distribution server 10 in accordance with the user's instructions. Again, request transmission means 27 may transmit requests for the distribution of video link information corresponding to video content that is stored by video content storage means 25 to video link information distribution server 10 after the passage of each predetermined time interval.

Link information reception means 28 is more specifically realized by the control module and network interface of an HDD recorder. Link information reception means 28 is equipped with functions for receiving video link information from video link information distribution server 10 by way of communication network 100.

In the present embodiment, the storage device of video link information distribution server 10 stores various programs for distributing video link information to video playback devices 20.

For example, the storage device of video link information distribution server 10 stores an information distribution program for causing a computer to execute processes of: detecting identical video, which are identical partial video contained in common in two or more items of video content of the video content accumulated by a video accumulation means; generating identical video correspondence information that indicates the correspondence relation of identical video contained in each item of video content based on the identical video detection results; and transmitting the generated identical video correspondence information to video playback devices by way of the communication network.

Explanation next regards operations.

In the present embodiment, the user of each video playback device 20 enters into a contract in advance with a service provider to use the video link information distribution service.

For example, each video playback device 20, in accordance with the user's operations, transmits user information that includes the user's name and the user's address information to video link information distribution server 10 by way of communication network 100 to register the user information in advance. Video link information distribution server 10 then issues a user ID to each video playback device 20 of a registered user.

Identical video detection means 11 of video link information distribution server 10 extracts, as required, video content that is accumulated by video content accumulation means 15 and detects identical scenes.

Video link information recording means 12 further generates video link information as required to record in video link information accumulation means 13.

In the present embodiment, the processes in which video link information distribution server 10 generates and records video link information are the same as the processes from Step S101 to Step S103 in the first embodiment.

Explanation next regards the operations by which video link information distribution server 10 distributes video link information to video playback devices 20.

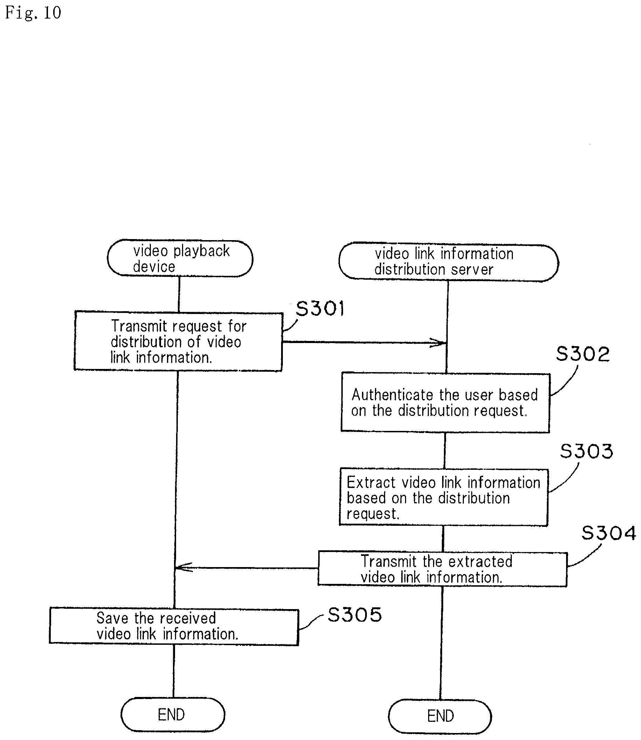

FIG. 10 is a flow chart showing an example of the distribution process by which video link information distribution server 10 distributes video link information to video playback device 20.

Request transmission means 27 of video playback device 20 transmits a request for the distribution of video link information to video link information distribution server 10 by way of communication network 100 at a predetermined timing (Step S301).

For example, when video playback device 20 implements programmed recording, request transmission means 27 transmits to video link information distribution server 10 a distribution request that contains the content name of the recorded video content.

In this case, request transmission means 27 transmits to video link information distribution server 10 byway of communication network 100 the user ID together with the distribution request.

Alternatively, request transmission means 27 transmits to video link information distribution server 10 distribution requests that contain the content name of each item of video content that video content storage means 25 stores when instructions are made by the user or at the passage of each of predetermined time intervals.

When request reception means 17 receives a distribution request, video link information distribution server 10 carries out a process for authenticating the user of video playback device 20 based on the received distribution request (Step S302).

In the present embodiment, video link information distribution server 10 authenticates the user based on the user ID that is received together with the distribution request for video link information. Upon confirming that the distribution request is from a registered user, video link information distribution server 10 executes, for example, a prescribed fee charging process to change for the distribution of information.

Upon confirming that the distribution request is from a registered user, link information extraction means 18 extracts from video link information accumulation means 13 the video link information for which distribution has been requested (Step S303).

In this case, link information extraction means 18 extracts the video content name contained in the received distribution request and extracts from video link information accumulation means 13 the video link information that corresponds to the extracted video content name.

In addition, link information transmission means 19 transmits the video link information that has been extracted by link information extraction means 18 to video playback device 20 by way of communication network 100 (Step S304).

Upon receiving the video link information, link information reception means 28 of video playback device 20 stores the received video link information in a storage device (for example, a hard disk or memory) (Step S305).

When playback is instructed by the user, video playback means 24 of video playback device 20 extracts the video content for which playback has been instructed from video content storage means 25 and starts playback.

When original video are being played, video playback means 24, based on the video link information received by link information reception means 28, both displays video and link information that contain the display of cue points on a display device.

Then, when the instruction "cued playback" is entered by the user, video playback means 24 carries out cued playback from the cue points. The process by which video playback means 24 plays original video and the process by which video playback means 24 implements cued playback are the same as the processes from Step S104 to Step S107 in the first embodiment.

As described in the foregoing explanation, according to the present embodiment, video playback device 20 obtains video link information from video link information distribution server 10 by way of communication network 100. Video playback device 20 then implements cued playback based on the acquired video link information.

Accordingly, the cued playback of important scenes can be easily carried out even for video content for which cue point information has not been conferred. In addition, because video playback device 20 need not generate video link information, the configuration of video playback device 20 can be simplified.

### Fourth Embodiment

Explanation next regards the fourth embodiment of the present invention with reference to the accompanying drawings.

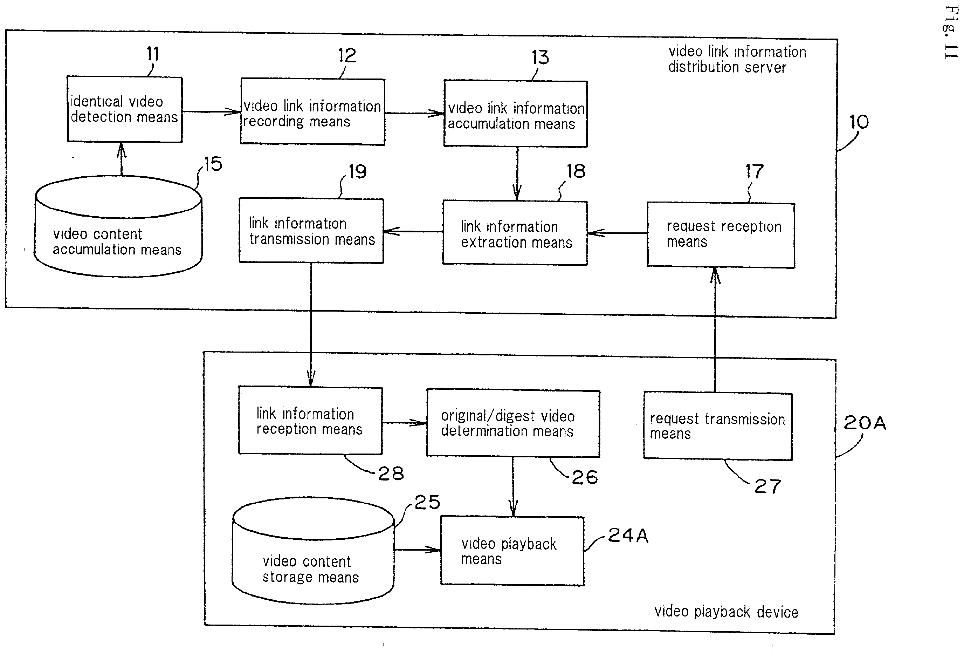

FIG. 11 is a function block diagram showing an example of another functional configuration of each device of the video content playback assistance system shown in FIG. 8.

In the present embodiment, the functions of video link information distribution server 10 are the same as the functions of video link information distribution server 10 in the third embodiment.

In the present embodiment, video playback device 20A includes original/digest video determination means 26 in addition to the constituent elements of video playback device 20 shown in FIG. 8.

In the present embodiment, video playback device 20A differs from the third embodiment in that the functions of video playback means 24A differ from the functions of video playback means 24 shown in FIG. 8.

The functions of each of video content storage means 25, request transmission means 27, and link information reception means 28 are the same as the functions of these components in the third embodiment.

Original/digest video determination means 26 is more specifically realized by the control module of an HDD recorder. Original/digest video determination means 26 is equipped with functions for, when playback is instructed by the user, determining whether the video content for which playback is instructed is original video or digest video.

The basic functions of original/digest video determination means 26 are the same as the functions of original/digest video determination means 6 shown in the second embodiment.

In addition, original and digest attributes may be conferred a the identical video correspondence information as metadata by the server, and original/digest video determination means 26 may use this metadata to determine whether video are original video or digest video.

More specifically, video playback means 24A is realized by the control module and input/output interface of an HDD recorder. Video playback means 24A is equipped with functions for reproducing video content in accordance with the user's playback instructions.

Video playback means 24A is further equipped with functions for carrying out cued playback in accordance with the user's instructions for cued playback when original video are being played. Video playback means 24A is further equipped with functions for extracting and reproducing a portion of original video in accordance with the user's instructions when reproducing digest video.

The basic functions of video playback means 24A are the same as the functions of video playback means 4A shown in the second embodiment.

Explanation next regards operation. In the present embodiment, the process by which video link information distribution server 10 generates and records video link information as necessary and the process by which video link information distribution server 10 distributes video link information in accordance with a request from video playback device 20A are the same as these processes in the third embodiment.

When the user instructs playback of video content, original/digest video determination means 26 of video playback device 20 determines whether the video content for which playback has been instructed is original video or digest video based on video link information received by link information reception means 28.

The process by which original/digest video determination means 26 determines whether original video or digest video is the same as the process of Step S205 in the second embodiment.

When the video content for which playback has been instructed is determined to be original video, video playback means 24A extracts the video content for which playback has been instructed from video content storage means 25 and begins playback, as in the third embodiment.

Based on the video link information received by link information reception means 28, video playback means 24A further both displays video and displays link information that contain a display of cue points on a display device. Then, when the instruction "cued playback" is entered by the user, video playback means 24A implements cued playback of video from the cue points.

When the video content for which playback is instructed is determined to be digest video, video playback means 24A extracts the video content for which playback has been instructed from video content storage means 25 and begins playback of the digest video.

When original video that correspond to digest video that are being played are stored in video content storage means 25, video playback means 24A displays an indication that the original video can be played together with the digest video that are being played.

When the user wishes to play original video during playback of digest video, the user operates video playback device 20A to enter instructions. Upon determining that the instruction "original video playback" has been entered by the user, video playback means 24A extracts the original video that correspond to the digest video that are being played from video content storage means 25 and plays the original video.

The process by which video playback device 20A plays digest video and the process by which original video are extracted and played in accordance with the user's instruction during the playback of digest video are the same as the processes from Step S209 to Step S211 in the second embodiment.

As described in the foregoing explanation, according to the present embodiment, video playback device 20A determines whether video content that is the object of playback is original video or digest video. Video playback device 20A further plays the corresponding original video in accordance with the user's instructions during the playback of digest video.

The user is therefore able to view original video of points before and after a scene of interest to the user even when the user is viewing digest video.

In addition, video playback device 20A does not need to generate video link information, and the configuration of video playback device 20A can therefore be simplified.

### Potential for Utilization in Industry

The present invention can be applied to a video playback device such as a hard disk recorder that plays video based on video content. In particular, the use of the present invention enables easy cued playback of video. The present invention can further be applied to an information distribution service for distributing information about link relations between items of video content to video playback devices.

## Claims

1. An video content playback assistance method for assisting the playback of video based on video content, comprising steps of:
acquiring identical video correspondence information that indicates the correspondence relation of identical video that are identical partial video contained in common in a plurality of items of video content (steps S101-S103, or S201-S203);
when cued playback is instructed, specifying points of identical video in video content based on said acquired identical video correspondence information and specifying cue points based on said specified points of Identical video (steps S105-S106 or S207-S208); and
based on video content, reproducing video from said specified cue points (step S107 or S208).

2. The video content playback assistance method according to claim 1, wherein:
original video and digest video that contain partial video of a part of the original video are accumulated as video content (step S101); and
identical partial video that are contained in common in said original video and said digest video that have been accumulated are detected (step S102); and
identical video correspondence information is generated by placing in a correspondence relation partial video of said digest video and partial video of said original video that have been detected (step S103).

3. The video content playback assistance method according to any one of claims 1 to 2, wherein, when cued playback is instructed, based on the identical video correspondence information, points that are a prescribed time interval before the leading points, of identical video within video content, are specified as cue points.

4. An video content playback assistance method according to any one of claims 1 to 2, wherein:
video scene change points in video content are detected by means of recognition of video contained in video content or recognition of sounds contained in video content; and
based on said detection results and identical video correspondence information, video scene change points that immediately precede the leading points of identical video within video content are specified as cue points.

5. The video content playback assistance method according to any one of claims 1 to 4, wherein:
when a plurality of cue points are specified in accordance with instructions for cued playback during playback of video content, the cue point that is closest to the currently played point among the plurality of specified cue points is selected; and
video content is played from said selected cue point.

6. The video content playback assistance method according to any one of claims 1 to 4, wherein
when a plurality of cue points are specified according to instructions for cued playback during playback of video content, any one cue point among said plurality of specified cue points is selected according to a prescribed degree of importance; and
video content is played from said selected cue point.

7. The video content playback assistance method according to any one of claims 1 to 6, comprising steps of:
when the playback of digest video that contain partial video that are a portion of original video is instructed, determining the existence of original video that contain identical video common to said digest video based on identical video correspondence information;
upon determining the existence of original video that contain said identical video, both reproducing said digest video and displaying an indication that original video that corresponding to the digest video can be played (step S209); and
when the playback of original video is instructed, reproducing original video that correspond to said digest video that are being played (steps S210, S211).

8. The video content playback assistance method according to claim 7, wherein, when the playback of original video is instructed, based on identical video correspondence information, partial video of points immediately before or immediately after points of identical video in original video are played.

9. The video content playback assistance method according to claim 7 or claim 8, further comprising a step of, when the playback of video content is instructed, determining whether the video content for which playback has been instructed is original video or digest video (step S205); wherein:
when the video content for which playback has been instructed is determined to be digest video, the digest video are played and an indication that original video that correspond to the digest video can be played is displayed (step S209); and
when the video content for which playback has been instructed is determined to be original video, the original video are played (step S206) and cued playback of the original video is carried out in accordance with instructions for cued playback (steps S207, S208).

10. The video content playback assistance method according to claim 9, wherein, when playback of video content is instructed, the degree of similarity between each frame picture contained in the video content is found, following which the video content is determined to be original video or digest video based on the obtained degree of similarity.

11. An video content playback assistance device for assisting the playback of video based on video content, comprising:
a video correspondence information acquisition means (1) for acquiring identical video correspondence information that indicates the correspondence relation of identical video, which are identical partial video contained in common in a plurality of items of video content;
a cue point specification means (2) for, when cued playback is instructed, specifying points of identical video within video content based on identical video correspondence information that has been acquired by said video correspondence information acquisition means and specifying cue points based on said specified points of identical video; and
a video playback means (4) for, based on video content, reproducing video from cue points that have been specified by said cue point specification means.

12. The video playback device according to claim 11, provided with:
a video type determination means (6) for, when playback of video content is instructed, determining whether the video content for which playback has been instructed is original video or digest video;
wherein said video playback means (4) is adapted:
to both play the original video and perform cued playback of the original video in accordance with instructions for cued playback when said video type determination means determines that the video content for which playback has been instructed is original video;
to both play the digest video and display an indication that original video that correspond to the digest video can be played when said video type determination means determines that the video content for which playback has been instructed is digest video; and
to play original video that correspond to digest video that are being played when playback of original video is instructed during the playback of digest video.

## Patentansprüche

1. Videoinhaltwiedergabehilfsverfahren zum Unterstützen der Wiedergabe eines Videos anhand des Videoinhalts, das die folgenden Schritte umfasst:
Erfassen von Übereinstimmungsinformationen identischer Videos, die die Übereinstimmungsbeziehung von identischen Videos angeben, die identische Teilvideos sind, die gemeinsam in mehreren Elementen des Videoinhalts enthalten sind (Schritte S101-S103 oder S201-S203);
dann, wenn eine aufgerufene Wiedergabe angewiesen wird, Spezifizieren von Punkten identischer Videos in dem Videoinhalt anhand der erfassten Übereinstimmungsinformationen identischer Videos und Spezifizieren von Aufrufpunkten anhand der spezifizierten Punkte identischer Videos (Schritte S105-S106 oder S207-S208); und
anhand des Videoinhalts Wiedergeben von Videos ab den spezifizierten Aufrufpunkten (Schritt S107 oder S208).

2. Videoinhaltwiedergabehilfsverfahren nach Anspruch 1, wobei:
Originalvideos und Auswahlvideos, die Teilvideos eines Teils der Originalvideos enthalten, als Videoinhalt akkumuliert werden (Schritt S101); und
identische Teilvideos, die gemeinsam in den Originalvideos und den Auswahlvideos enthalten sind, die akkumuliert wurden, detektiert werden (Schritt S102); und
Übereinstimmungsinformationen identischer Videos dadurch erzeugt werden, dass die Teilvideos der Auswahlvideos und die Teilvideos der Originalvideos, die detektiert wurden (Schritt S103), in eine Übereinstimmungsbeziehung gesetzt werden.

3. Videoinhaltwiedergabehilfsverfahren nach einem der Ansprüche 1 bis 2, wobei dann, wenn eine aufgerufene Wiedergabe angewiesen wird, Punkte, die ein vorgeschriebenes Zeitintervall vor Führungspunkten von identischen Videos innerhalb des Videoinhalts liegen, anhand der Übereinstimmungsinformationen identischer Videos als Aufrufpunkte spezifiziert werden.

4. Videoinhaltwiedergabehilfsverfahren nach einem der Ansprüche 1 bis 2, wobei:
Videoszenenänderungspunkte im Videoinhalt mit Hilfe einer Erkennung von Videos, die in einem Videoinhalt enthalten sind, oder einer Erkennung von Tönen, die in einem Videoinhalt enthalten sind, detektiert werden; und
anhand der Detektionsergebnisse und der Übereinstimmungsinformationen identischer Videos Videoszenenänderungspunkte, die den Führungspunkten von identischen Videos innerhalb des Videoinhalts unmittelbar vorhergehen, als Aufrufpunkte spezifiziert werden.

5. Videoinhaltwiedergabehilfsverfahren nach einem der Ansprüche 1 bis 4, wobei:
dann, wenn mehrere Aufrufpunkte gemäß Anweisungen für eine aufgerufene Wiedergabe während der Wiedergabe des Videoinhalts spezifiziert werden, der Aufrufpunkt, der am nächsten an dem derzeit gespielten Punkt liegt, unter den mehreren spezifizierten Aufrufpunkten ausgewählt wird; und
der Videoinhalt ab dem ausgewählten Aufrufpunkt gespielt wird.

6. Videoinhaltwiedergabehilfsverfahren nach einem der Ansprüche 1 bis 4, wobei
dann, wenn mehrere Aufrufpunkte gemäß Anweisungen für eine aufgerufene Wiedergabe während der Wiedergabe des Videoinhalts spezifiziert werden, ein beliebiger Aufrufpunkt unter den mehreren spezifizierten Aufrufpunkten gemäß einem vorgeschriebenen Bedeutungsgrad ausgewählt wird; und
der Videoinhalt ab dem ausgewählten Aufrufpunkt gespielt wird.

7. Videoinhaltwiedergabehilfsverfahren nach einem der Ansprüche 1 bis 6, das die Schritte umfasst:
dann, wenn die Wiedergabe von Auswahlvideos, die Teilvideos enthalten, die ein Teil der Originalvideos sind, angewiesen wird, Bestimmen des Vorhandensein von Originalvideos, die identische Videos enthalten, die den Auswahlvideos gemeinsam sind, anhand von Übereinstimmungsinformationen identischer Videos;
bei Bestimmen des Vorhandenseins von Originalvideos, die identische Videos enthalten, sowohl Wiedergeben der Auswahlvideos als auch Anzeigen einer Angabe, dass Originalvideos, die den Auswahlvideos entsprechen, gespielt werden können (Schritt S209); und
dann, wenn die Wiedergabe von Originalvideos angewiesen wird, Wiedergeben von Originalvideos, die den Auswahlvideos entsprechen, die gespielt werden (Schritte S210, S211).

8. Videoinhaltwiedergabehilfsverfahren nach Anspruch 7, wobei dann, wenn die Wiedergabe von Originalvideos angewiesen wird, anhand von Übereinstimmungsinformationen identischer Videos Teilvideos von Punkten unmittelbar vor oder unmittelbar nach Punkten von identischen Videos in Originalvideos gespielt werden.

9. Videoinhaltwiedergabehilfsverfahren nach Anspruch 7 oder Anspruch 8, das ferner einen Schritt umfasst, dann, wenn die Wiedergabe von Inhalt angewiesen wird, zu bestimmen, ob der Videoinhalt, für den eine Wiedergabe angewiesen wurde, Originalvideos oder Auswahlvideos sind (Schritt S205); wobei:
dann, wenn bestimmt wird, dass der Videoinhalt, für den eine Wiedergabe angewiesen wurde, Auswahlvideos enthält, die Auswahlvideos gespielt werden und eine Angabe, dass die Originalvideos, die den Auswahlvideos entsprechen, gespielt werden können, angezeigt wird (Schritt S209); und
dann, wenn bestimmt wird, dass der Videoinhalt, für den eine Wiedergabe angewiesen wurde, Originalvideos sind, die Originalvideos gespielt werden (Schritt S206) und eine aufgerufene Wiedergabe der Originalvideos gemäß Anweisungen für eine aufgerufene Wiedergabe ausgeführt wird (Schritte S207, S208).

10. Videoinhaltwiedergabehilfsverfahren nach Anspruch 9, wobei dann, wenn die Wiedergabe von Videoinhalt angewiesen wird, der Grad der Ähnlichkeit zwischen jedem Rahmenbild, das in dem Videoinhalt enthalten ist, gefunden wird, worauf folgt, dass anhand des erhaltenen Grads von Ähnlichkeit bestimmt wird, dass der Videoinhalt Originalvideos oder Auswahlvideos sind.

11. Videoinhaltwiedergabehilfsvorrichtung zum Unterstützen der Wiedergabe von Videos anhand des Videoinhalts, die Folgendes umfasst:
Mittel zum Erfassen von Videoübereinstimmungsinformationen (1) zum Erfassen von Übereinstimmungsinformationen identischer Videos, die die Übereinstimmungsbeziehung von identischen Videos angeben, die identische Teilvideos sind, die gemeinsam in mehreren Elementen von Videoinhalt enthalten sind;
Aufrufpunktspezifikationsmittel (2) zum Spezifizieren von Punkten von identischen Videos innerhalb des Videoinhalts anhand von Übereinstimmungsinformationen identischer Videos, die durch die Mittel zum Erfassen von Videoübereinstimmungsinformationen erfasst wurden, und Spezifizieren von Aufrufpunkten anhand von spezifizierten Punkten von identischen Videos dann, wenn eine aufgerufene Wiedergabe angewiesen wird; und
Videowiedergabemittel (4) zum Wiedergeben von Videos ab Aufrufpunkten die durch die Aufrufpunktspezifizierungsmittel spezifiziert wurden, anhand des Videoinhalts.

12. Videowiedergabevorrichtung nach Anspruch 11, die ausgestattet ist mit:
Videotypbestimmungsmitteln (6) zum Bestimmen, ob der Videoinhalt, für den eine Wiedergabe angewiesen wurde, Originalvideos oder Auswahlvideos sind, dann, wenn eine Wiedergabe des Videoinhalts angewiesen wird;
wobei die Videowiedergabemittel (4) ausgelegt sind:
sowohl Originalvideos zu spielen als auch eine aufgerufene Wiedergabe der Originalvideos gemäß Anweisungen für eine aufgerufene Wiedergabe auszuführen, wenn die Videotypbestimmungsmittel bestimmen, dass der Videoinhalt, für den eine Wiedergabe angewiesen wurde, Originalvideos sind;
sowohl Auswahlvideos zu spielen als auch eine Angabe anzuzeigen, dass Originalvideos, die den Auswahlvideos entsprechen, gespielt werden können, wenn die Videotypbestimmungsmittel bestimmen, dass der Videoinhalt, für den eine Wiedergabe angewiesen wurde, Auswahlvideos enthält; und
Originalvideos zu spielen, die Auswahlvideos entsprechen, die gespielt werden, wenn eine Wiedergabe von Originalvideos während der Wiedergabe von Auswahlvideos angewiesen wird.

## Revendications

1. Procédé d'assistance à la lecture de contenu vidéo pour assister la lecture de vidéo sur la base d'un contenu vidéo, comprenant les étapes suivantes :
l'acquisition d'informations de correspondance de vidéos identiques qui indiquent la relation de correspondance de vidéos identiques qui sont des vidéos partielles identiques contenues en commun dans une pluralité d'éléments de contenu vidéo (étapes S101-S103 ou S201-S203) ;
quand une lecture mise en attente est demandée, la spécification de points de vidéos identiques dans un contenu vidéo sur la base desdites informations de correspondance de vidéos identiques acquises et la spécification de points de repère sur la base desdits points spécifiés de vidéos identiques (étapes S105-S106 ou S207-S208) ; et
sur la base d'un contenu vidéo, la reproduction vidéo à partir desdits points de repère spécifiés (étapes S107 ou S208).

2. Procédé d'assistance à la lecture de contenu vidéo selon la revendication 1, dans lequel :
une vidéo originale et une vidéo condensée qui contiennent une vidéo partielle d'une partie de la vidéo originale sont accumulées comme un contenu vidéo (étape S101) ; et
des vidéos partielles identiques qui sont contenues en commun dans ladite vidéo originale et ladite vidéo condensée qui ont été accumulées sont détectées (étape S102) ; et
des informations de correspondance de vidéos identiques sont générées en plaçant dans une relation de correspondance des vidéos partielles de ladite vidéo condensée et des vidéos partielles de ladite vidéo originale qui ont été détectées (étape S103).

3. Procédé d'assistance à la lecture de contenu vidéo selon l'une quelconque des revendications 1 à 2, dans lequel, quand une lecture mise en attente est demandée, sur la base des informations de correspondance de vidéos identiques, des points qui sont un intervalle de temps prescrit avant les points d'attaque, de vidéos identiques dans un contenu vidéo, sont spécifiés comme des points de repère.

4. Procédé d'assistance à la lecture de contenu vidéo selon l'une quelconque des revendications 1 à 2, dans lequel :
des points de changement de scène vidéo dans un contenu vidéo sont détectés au moyen d'une reconnaissance de vidéo contenue dans le contenu vidéo ou d'une reconnaissance de sons contenus dans le contenu vidéo ; et
sur la base desdits résultats de détection et des informations de correspondance de vidéos identiques, des points de changement de scène vidéo qui précèdent immédiatement les points d'attaque de vidéos identiques dans le contenu vidéo sont spécifiés comme des points de repère.

5. Procédé d'assistance à la lecture de contenu vidéo selon l'une quelconque des revendications 1 à 4, dans lequel :
quand une pluralité de points de repère sont spécifiés en fonction des instructions pour une lecture mise en attente durant la lecture de contenu vidéo, le point de repère qui est le plus proche du point actuellement reproduit parmi la pluralité de points de repère spécifiés est sélectionné ; et
le contenu vidéo est reproduit à partir dudit point de repère sélectionné.

6. Procédé d'assistance à la lecture de contenu vidéo selon l'une quelconque des revendications 1 à 4, dans lequel :
quand une pluralité de points de repère sont spécifiés en fonction des instructions pour une lecture mise en attente durant la lecture de contenu vidéo, n'importe quel point de repère parmi ladite pluralité de points de repère spécifiés est sélectionné en fonction d'un degré d'importance prescrit ; et
le contenu vidéo est reproduit à partir dudit point de repère sélectionné.

7. Procédé d'assistance à la lecture de contenu vidéo selon l'une quelconque des revendications 1 à 6, comprenant les étapes suivantes :
quand la lecture de la vidéo condensée qui contient des vidéos partielles qui sont une portion de vidéo originale est demandée, la détermination de l'existence d'une vidéo originale qui contient des vidéos identiques communes à ladite vidéo condensée sur la base d'informations de correspondance de vidéos identiques ;
lors de la détermination de l'existence d'une vidéo originale qui contient lesdites vidéos identiques, à la fois la reproduction de ladite vidéo condensée et l'affichage d'une indication du fait que la vidéo originale qui correspond à la vidéo condensée peut être reproduite (étape S209) ; et
quand la lecture de la vidéo originale est demandée, la reproduction de la vidéo originale qui correspond auxdites vidéos condensées qui sont reproduites (étapes S210, S211).

8. Procédé d'assistance à la lecture de contenu vidéo selon la revendication 7, dans lequel, quand la lecture de la vidéo originale est demandée, sur la base d'informations de correspondance de vidéos identiques, des vidéos partielles de points immédiatement avant ou immédiatement après des points de vidéos identiques dans la vidéo originale sont reproduits.

9. Procédé d'assistance à la lecture de contenu vidéo selon la revendication 7 ou la revendication 8, comprenant en outre une étape, quand la lecture du contenu vidéo est demandée, de détermination du fait que le contenu vidéo pour lequel une lecture a été demandée est une vidéo originale ou une vidéo condensée (étape S205) ; dans lequel :
quand le contenu vidéo pour lequel une lecture a été demandée est déterminé comme étant des vidéos condensées, les vidéos condensées sont reproduites et une indication du fait que les vidéos originales qui correspondent aux vidéos condensées peuvent être reproduites est affichée (étape S209) ; et
quand le contenu vidéo pour lequel une lecture a été demandée est déterminé comme étant des vidéos originales, les vidéos originales sont reproduites (étape S206) et une lecture mise en attente des vidéos originales est exécutée en fonction d'instructions pour la lecture mise en attente (étapes S207, S208).

10. Procédé d'assistance à la lecture de contenu vidéo selon la revendication 9, dans lequel, quand la lecture du contenu vidéo est demandée, le degré de similitude entre chaque image de trame contenue dans le contenu vidéo est trouvé, après quoi le contenu vidéo est déterminé comme étant une vidéo originale ou une vidéo condensée sur la base du degré de similitude obtenu.

11. Dispositif d'assistance à la lecture de contenu vidéo pour assister la lecture de vidéo sur la base d'un contenu vidéo, comprenant :
un moyen d'acquisition d'informations de correspondance de vidéos (1) pour acquérir des informations de correspondance de vidéos identiques qui indiquent la relation de correspondance de vidéos identiques, qui sont des vidéos partielles identiques contenues en commun dans une pluralité d'éléments de contenu vidéo ;
un moyen de spécification de points de repère (2) pour, quand une lecture mise en attente est demandée, spécifier des points de vidéos identiques dans un contenu vidéo sur la base des informations de correspondance de vidéos identiques qui ont été acquises par ledit moyen d'acquisition d'informations de correspondance de vidéos et spécifier des points de repère sur la base desdits points spécifiés de vidéos identiques ; et
un moyen de lecture de vidéos (4) pour, sur la base d'un contenu vidéo, reproduire des vidéos à partir de points de repère qui ont été spécifiés par ledit moyen de spécification de points de repère.

12. Dispositif de lecture vidéo selon la revendication 11, comprenant :
un moyen de détermination de type de vidéo (6) pour, quand une lecture de contenu vidéo est demandée, déterminer le fait que le contenu vidéo pour lequel une lecture a été demandée est une vidéo originale ou une vidéo condensée ;
dans lequel ledit moyen de lecture de vidéos (4) est adapté pour :
à la fois reproduire la vidéo originale et exécuter une lecture mise en attente de la vidéo originale en fonction d'instructions pour une lecture mise en attente quand ledit moyen de détermination de type de vidéo détermine que le contenu vidéo pour lequel une lecture a été demandée est une vidéo originale ;
à la fois reproduire la vidéo condensée et afficher une indication du fait que les vidéos originales qui correspondent aux vidéos condensées peuvent être reproduites quand ledit moyen de détermination de type de vidéo détermine que le contenu vidéo pour lequel une lecture a été demandée est une vidéo condensée ; et
reproduire la vidéo originale qui correspond à des vidéos condensées qui sont reproduites quand la lecture de la vidéo originale est demandée durant la lecture de vidéos condensées.
